# EUROPÄISCHE PATENTSCHRIFT

(11) **EP 0 468 252 B1**
(45) Veröffentlichungstag und Bekanntmachung des Hinweises auf die Patenterteilung: **30.11.1994**
(21) Anmeldenummer: 91111186.2
(22) Anmeldetag: 05.07.1991
(51) Int. Cl.: F21V 15/00, F21Q 1/00

(54) **Fahrzeugleuchte**
Vehicle lamp
Lampe de véhicule

(30) Priorität: 14.07.1990 DE 4022480
(43) Veröffentlichungstag der Anmeldung: 29.01.1992
(73) Patentinhaber: Hella KG Hueck & Co., 59552 Lippstadt (DE)
(72) Erfinder: Meyer, Horst-Peter, W-2800 Bremen 61 (DE); Kohl, Werner, W-2800 Bremen 33 (DE); Dietzsch, Werner, W-2900 Oldenburg (DE); Metzger, Peter, W-4792 Bad Lippspringe (DE)

(56) Entgegenhaltungen:
- DE-A- 1 904 251
- NL-A- 6 501 068

## Beschreibung

Die Erfindung betrifft eine Fahrzeugleuchte, die über eine Haltevorrichtung mit einer Grundplatte verbunden ist und eine zur Entwässerung geeignete Öffnung in der Lichtscheibe besitzt.

Mit Fahrzeugen sind hier insbesondere Luftfahrzeuge gemeint, bei denen solche Leuchten zumeist in Verbindung mit einer Lichtblitzeinrichtung ein wesentliches Sicherheitselement darstellen, da sie Zusammenstöße von Luftfahrzeugen untereinander oder Zusammenstöße von Luftfahrzeugen und Vögeln verhindern sollen.

Eine solche Fahrzeugleuchte muß mit zur Entwässerung geeigneten Mitteln, vorzugsweise einer Öffnung in der Lichtscheibe der Fahrzeugleuchte versehen sein, da aufgrund schnell wechselnder Temperatur- und Druckverhältnisse (z. B. bei der Landung eines Luftfahrzeugs) im Innenraum der Fahrzeugleuchte Feuchtigkeit kondensiert. Dies bedeutet jedoch eine erhöhte Zerstörungsgefahr der Fahrzeugleuchte durch Blitzschlag wegen der vorhandenen Öffnung, in die der Blitz einschlagen und die Fahrzeugleuchte explosionsartig zerstören kann. Auch die Anbringung einer entfernbaren Dichtung zur Beseitigung des Wassers in der Fahrzeugleuchte bringt keine Abhilfe bezüglich der Blitzschlagsicherheit. Das unterschiedliche elektrische Potential zwischen dem Glas der Lichtscheibe und der in der Öffnung der Lichtscheibe sitzenden Dichtung bietet dem Blitz keinen Widerstand gegen einen Einschlag in diese abgedichtete Öffnung der Lichtscheibe. Eine vorhandene Dichtung, die als Verschluß einer Öffnung in der Lichtscheibe verwendet wird, ist bei Blitzschlag so zu betrachten, als wenn keine Dichtung vorhanden wäre.

Die Erfindung hat die Aufgabe, eine Fahrzeugleuchte zu schaffen, die auf möglichst einfache und kostengünstige Weise vor Zerstörung durch Blitzschlag geschützt ist.

Diese Aufgabe wird erfindungsgemäß dadurch gelöst, daß ein elektrisch leitender Bolzen vorhanden ist, dessen eines Ende in die Öffnung hineinragt und dessen anderes Ende in elektrisch leitender Verbindung zur Fahrzeugmasse steht.

Die erfindungsgemäße Fahrzeugleuchte hat also gegenüber vorbekannten Leuchten den Vorteil, daß eine als Blitzableiter wirkende Einrichtung vorgesehen ist, welche die Fahrzeugleuchte, das heißt die Lichtscheibe und die sich im Leuchteninneren befindliche Lichtquelle, wirkungsvoll vor Zerstörung durch Blitzeinschlag schützt.

Vorteilhafte Ausgestaltungen und Weiterbildungen des Erfindungsgegenstands gehen aus den Unteransprüchen hervor.

Es ist vorteilhaft, die Länge des Bolzens so zu wählen, daß das die Öffnung der Lichtscheibe durchstoßende Ende vergleichbar dem Blitzableiter eines Gebäudes geringfügig über das Niveau der Außenfläche der Lichtscheibe hinausragt. Auf diese Weise wird, bedingt durch den Spitzeneffekt, sichergestellt, daß im Falle eines Blitzeinschlags in die Fahrzeugleuchte die Blitzenergie durch den Bolzen abgeführt wird.

Zum Schutz des Leuchteninneren vor Regen oder vor Verunreinigungen, die beispielsweise von den Triebwerken eines Luftfahrzeugs ausgestoßen werden, ist es sinnvoll, die Öffnung in der Lichtscheibe durch eine Elastomerdichtung zu verschließen. Um das Entwässern der Fahrzeugleuchte, z. B. im Rahmen von Wartungsarbeiten, zu ermöglichen, sollte die Dichtung aus der Öffnung leicht entnehmbar sein.

Aufgrund der möglichen starken Wärmeentwicklung durch die Lichtquelle im Inneren der Fahrzeugleuchte sowie den in großer Höhe von außen angreifenden tiefen Temperaturen ist es vorteilhaft, für die Dichtung einen möglichst temperaturunempfindlichen Elastomerwerkstoff vorzusehen.

In diesem Zusammenhang kann vorteilhaft die temperaturbeständige Elastomerdichtung aus einem elektrisch leitenden Elastomer bestehen. Dies ist insbesondere dann von Vorteil, wenn die Lichtscheibe aus Gründen der Abschirmung von durch die Lichtquelle erzeugter elektromagnetischer Strahlung z. B. mit einer Metalloxydschicht elektrisch leitend beschichtet ist. Die elektrisch leitfähige Elastomerdichtung deckt dann den Zwischenraum zwischen dem Bolzen und dem Rand der Öffnung derart ab, daß die gesamte Außenoberfläche der Fahrzeugleuchte elektrisch leitfähig abgeschirmt ist und eine Störung, z. B. von Funkeinrichtungen, durch die Blitzlichtquelle im Inneren der Fahrzeugleuchte vermieden wird.

Um ein sicheres Ableiten der Blitzenergie zur Fahrzeugmasse zu ermöglichen, sind gute elektrische Verbindungen zwischen Bolzen und Grundplatte einerseits sowie zwischen Grundplatte und Fahrzeugmasse andererseits nötig. Möglichst geringe übergangswiderstände erreicht man insbesondere durch großflächige Verbindungen zwischen den genannten Elementen. Daher ist es vorteilhaft, das mit der Grundplatte in Verbindung stehende Ende des Bolzens mit einem Flansch zu versehen. Des weiteren ist es vorteilhaft, den Flansch des Bolzens mit der Grundplatte zu vernieten, und zwar zum einen weil eine dauerhafte Verbindung, wie sie hier gewünscht wird, besonders kostengünstig als Nietverbindung ausführbar ist, zum anderen aber auch weil die Bestandteile einer Schraubverbindung durch den hohen Stromfluß bei einem Blitzeinschlag ohnehin miteinander verschweißen würden und die Schraubverbindung somit unlösbar würde.

Der Bolzen wird bei einem Blitzeinschlag kurzfristig mit Stromstärken in der Größenordnung von einigen hundert Kiloampere belastet. Daher muß das Bolzenmaterial neben einem guten elektrischen Leitungsvermögen auch eine gute Temperaturbeständigkeit aufweisen.

Aus diesen Gründen fertigt man den Bolzen vorteilhafterweise aus Stahl, den man zum Schutz vor Korrosion vernickelt. Für dieses Material liegt der benötigte Mindestquerschnitt erfahrungsgemäß in der Größenordnung von 20 mm². Dieser Wert läßt sich theoretisch durch die Verwendung von noch besser leitenden Materialien (z. B. Silber) bis auf ca. 3 mm² senken.

Um ein möglichst gutes Strom- und Temperaturleitvermögen auf der gesamten Länge des Bolzens zu erhalten, wählt man zweckmäßigerweise einen möglichst homogenen Querschnitt.

Die den Bolzen bei einem Blitzeinschlag durchfließenden Ströme fließen über eine elektrisch leitende, möglichst großflächige Grundplatte, die mit der Fahrzeugmasse verschraubt ist, zur Fahrzeugmasse hin ab. Durch diese großflächige elektrische Verbindung sind die Stromdichten so weit herabgesetzt, daß es zu keinem Verschweißen der Verschraubung kommen kann. Der gleiche Vorteil ergibt sich, wenn als Haltevorrichtung, die die Lichtscheibe mit der Grundplatte verbindet, ein großflächiger Spannrahmen verwendet wird. Die Fahrzeugleuchte läßt sich somit auch noch nach einem Blitzeinschlag leicht montieren bzw. demontieren.

Aus Gewichtsgründen ist es von Vorteil, die Grundplatte aus Aluminium zu fertigen.

Diese Vorrichtung zum Schutz der Fahrzeugleuchte vor Blitzeinschlag bewährt sich aber auch, wenn die Fahrzeugleuchte auf einer nichtleitenden Oberfläche des Fahrzeugs angebracht ist. In diesem Fall wird die elektrisch leitende Verbindung über ein ausreichend dimensioniertes Masseband hergestellt.

Zur Erreichung einer möglichst großflächigen und allseitigen Lichtabstrahlung kann die Lichtscheibe vorteilhafterweise als Lichtkuppel ausgebildet werden. Obwohl die Lichtkuppel lokal die Niveaufläche des Fahrzeugs überragt, ist die Fahrzeugleuchte durch die erfindungsgemäße Vorrichtung weitestgehend gegen die Zerstörung durch Blitzeinschlag geschützt.

Ausführungsbeispiele der erfindungsgemäßen Fahrzeugleuchte sind in den Zeichnungen dargestellt und werden anhand der Zeichnungen näher erläutert.

Es zeigen
Figur 1 eine erfindungsgemäße Fahrzeugleuchte, deren Grundplatte auf einer elektrisch leitenden Fahrzeugoberfläche angebracht ist und
Figur 2 eine gleichartige, erfindungsgemäße Fahrzeugleuchte, welche auf einer elektrisch nicht leitenden Oberfläche montiert ist.

Die in den Figuren dargestellte erfindungsgemäße Fahrzeugleuchte findet als Warnleuchte in Luftfahrzeugen Verwendung.

Eine kuppelförmige Lichtscheibe (3) ist mit einem als Haltevorrichtung (8) dienenden Spannrahmen auf einer Grundplatte (4) befestigt. Eine zur Entwässerung dienende Öffnung (6) in der Lichtscheibe (3) wird von einem Ende eines elektrisch leitenden Bolzens (1) durchstoßen. Der annähernd homogene Querschnitt des Bolzens (1) füllt die Öffnung (6) in der Lichtscheibe (3) nicht vollständig aus. Im Zwischenraum zwischen dem Bolzen (1) und der Öffnung (6) ist eine Elastomerdichtung (5) angebracht, welche das Innere der Fahrzeugleuchte vor dem Eindringen von Regenwasser und Schmutz schützt und welche zum Ablassen von Kondenswasser aus dem Leuchteninneren aus der Öffnung (6) entnehmbar ist.

Das andere Ende des Bolzens (1) ist als Flansch (2) ausgebildet, welcher mit der Grundplatte (4) vernietet ist.

Um den Bolzen (1) herum ist eine torusförmige Lichtquelle (7), vorzugsweise eine Blitzlampe, angeordnet. Für diese Lichtquelle (7) ist unterhalb der Grundplatte (4) eine Ansteuerungsvorrichtung (9) vorgesehen.

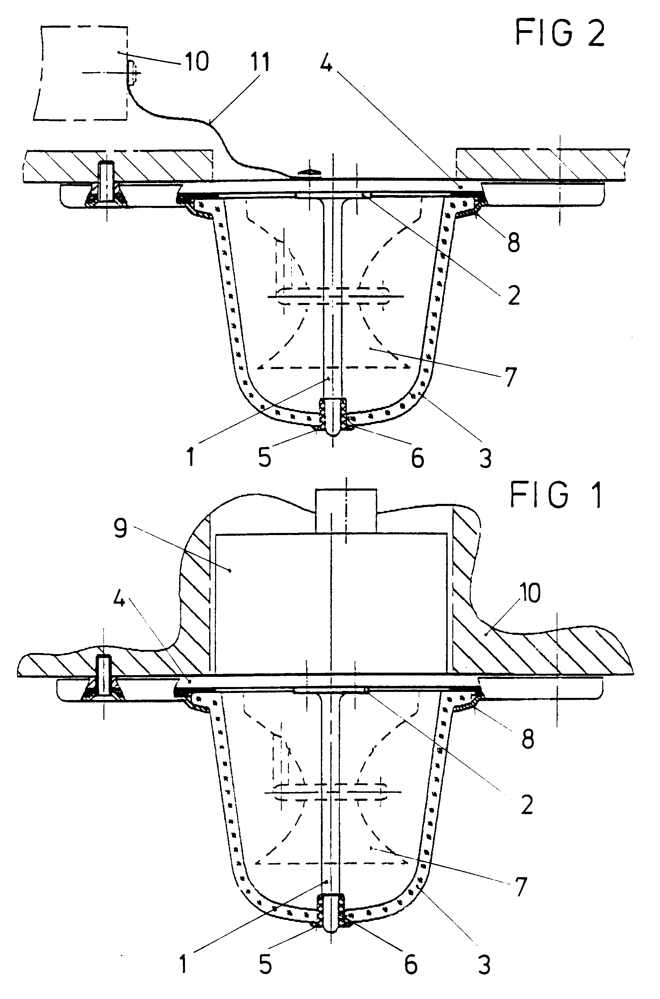

Bei dem in der Figur 1 dargestellten Ausführungsbeispiel einer Fahrzeugleuchte ist die Grundplatte (4) direkt mit der Fahrzeugmasse (10) verschraubt und steht über der gesamten Fläche der Grundplatte (4) mit der Fahrzeugmasse (10) in elektrisch leitender Verbindung.

Das in der Figur 2 dargestellte Ausführungsbeispiel zeigt eine Fahrzeugleuchte, welche mit elektrisch nicht leitenden Teilen der Fahrzeugoberfläche verschraubt ist. Die elektrische Verbindung von der Grundplatte (4) zur Fahrzeugmasse (10), in diesem Fall zum Gerippe des Luftfahrzeugs, wird über ein Masseband (11) hergestellt.

Im folgenden wird die Wirkungsweise der blitzschützenden Vorrichtung innerhalb der erfindungsgemäßen Fahrzeugleuchte anhand des in der Figur 1 dargestellten Ausführungsbeispiels näher erläutert.

Elektrische Ladungen innerhalb der Atmosphäre entladen sich nicht nur zwischen Wolken und dem Erdboden, sondern führen oft auch zu elektrischen überschlägen zwischen verschiedenen Wolken. Da die Oberfläche von Luftfahrzeugen im allgemeinen sehr viel besser leitet als die sie umgebende Luft, sind Luftfahrzeuge häufig das Ziel von Blitzeinschlägen, wobei der Blitz bevorzugt in aus der Fahrzeugoberfläche herausragende Teile eindringt, dann zur Fahrzeugmasse abfließt und das Luftfahrzeug an anderer Stelle wieder verläßt.

Insbesondere die Außenleuchten von Luftfahrzeugen sind durch Einschläge gefährdet, insbesondere dann, wenn sie in der Lichtscheibe eine Öffnung aufweisen und im Leuchteninneren elektrisch leitfähige Elemente (wie z. B. die Lichtquelle) besitzen.

Bei der in der Figur 1 dargestellten erfindungsgemäßen Fahrzeugleuchte schlägt der Blitz anstatt in die Lichtquelle (7) bevorzugt in den die Außenfläche der Lichtscheibe (3) etwas überragenden Bolzen (1) ein. Die elektrische Ladung fließt über den Querschnitt des Bolzens (1) und über den großflächigen Flansch (2) zur Grundplatte (4) und von da über die gesamte Fläche der Grundplatte (4) zur Fahrzeugmasse (10) hin ab. Die Blitzenergie wird auf diese Weise an der Lichtscheibe (3) und der Lichtquelle (7) vorbeigeleitet. Somit ist die gesamte Leuchte vor Zerstörung geschützt.

Durch Verwendung eines Spannrahmens als Haltevorrichtung (8) für die Lichtscheibe weist die Leuchte nur wenige lösbare Verbindungselemente auf. So sind beispielhaft nur der Spannrahmen (8), die Grundplatte (4) und die Fahrzeugmasse (10) miteinander verschraubt. Da die Schrauben mit großflächigen metallischen Flächen in Verbindung stehen, werden sie bei einem Blitzschlag nur von relativ geringen Stromdichten durchflossen. Die Schraubverbindungen sind somit zuverlässig gegen Verschweißen geschützt und die Leuchte bleibt selbst nach einem Blitzeinschlag demontier- bzw. montierbar.

## Patentansprüche

1. Fahrzeugleuchte, mit einer Lichtscheibe, die über eine Haltevorrichtung mit einer Grundplatte verbunden ist und eine zur Entwässerung geeignete Öffnung in der Lichtscheibe besitzt, dadurch gekennzeichnet, daß ein elektrisch leitender Bolzen (1) vorhanden ist, dessen eines Ende in die Öffnung (6) hineinragt und dessen anderes Ende in elektrisch leitender Verbindung zur Fahrzeugmasse (10) steht.

2. Fahrzeugleuchte nach Anspruch 1, dadurch gekennzeichnet, daß der Bolzen (1) geringfügig über das Niveau der Außenfläche der Lichtscheibe (3) hinausragt.

3. Fahrzeugleuchte nach Anspruch 1, dadurch gekennzeichnet, daß der Zwischenraum zwischen dem Bolzen (1) und dem Rand der Öffnung (6) durch eine entnehmbare, temperaturbeständige Elastomerdichtung (5) verschließbar ist.

4. Fahrzeugleuchte nach Anspruch 1, dadurch gekennzeichnet, daß der Bolzen (1) über einen Flansch (2) mit der Grundplatte (4) elektrisch leitend verbunden ist.

5. Fahrzeugleuchte nach Anspruch 4, dadurch gekennzeichnet, daß der Flansch (2) des Bolzens (1) mit der Grundplatte (4) vernietet ist.

6. Fahrzeugleuchte nach Anspruch 1, dadurch gekennzeichnet, daß der Bolzen (1) aus vernickeltem Stahl besteht.

7. Fahrzeugleuchte nach Anspruch 1, dadurch gekennzeichnet, daß der Bolzen (1) einen annähernd homogenen Querschnitt besitzt.

8. Fahrzeugleuchte nach Anspruch 7, dadurch gekennzeichnet, daß der Querschnitt des Bolzens (1) mindestens 3 mm² vorzugsweise 20 mm² beträgt.

9. Fahrzeugleuchte nach Anspruch 1, dadurch gekennzeichnet, daß der Bolzen (1) mit der Fahrzeugmasse (10) über ein Masseband (11) in elektrisch leitender Verbindung steht.

10. Fahrzeugleuchte nach Anspruch 1, dadurch gekennzeichnet, daß die Lichtscheibe (3) als Lichtkuppel ausgeführt ist.

11. Fahrzeugleuchte nach Anspruch 1, dadurch gekennzeichnet, daß die Haltevorrichtung (8) für die Lichtscheibe (3) als Spannrahmen ausgebildet ist.

12. Fahrzeugleuchte nach Anspruch 1, dadurch gekennzeichnet, daß die Grundplatte (4) aus einem elektrisch leitenden Material besteht.

13. Fahrzeugleuchte nach Anspruch 12, dadurch gekennzeichnet, daß die Grundplatte (4) aus Aluminium besteht.

14. Fahrzeugleuchte nach Anspruch 3, dadurch gekennzeichnet, daß die temperaturbeständige Elastomerdichtung (5) aus einem elektrisch leitenden Elastomer besteht.

## Claims

1. A vehicle light with a light cover lens which is attached to a base plate via a holding device, and which has an opening suitable for water drainage in the light cover lens, characterised in that an electrically conducting pin (1) is present, one end of which projects into the opening (6) and the other end of which is electrically conductively connected to the vehicle earth (10).

2. A vehicle light according to claim 1, characterised in that the pin (1) projects slightly beyond the level of the outer face of the light cover lens (3).

3. A vehicle light according to claim 1, characterised in that the intermediate space between the pin (1) and the edge of the opening (6) can be sealed by a removable, temperature-resistant elastomeric seal (5).

4. A vehicle light according to claim 1, characterised in that the pin (1) is electrically conductively connected to the base plate (4) via a flange (2).

5. A vehicle light according to claim 4, characterised in that the flange (2) of the pin (1) is rivetted to the base plate (4).

6. A vehicle light according to claim 1, characterised in that the pin (1) consists of nickel-plated steel.

7. A vehicle light according to claim 1, characterised in that the pin (1) has an approximately uniform cross-section.

8. A vehicle light according to claim 7, characterised in that the cross-section of the pin (1) is at least 3 mm², preferably 20 mm².

9. A vehicle light according to claim 1, characterised in that the pin (1) is electrically conductively connected to the vehicle earth (10) via an earthing strap (11).

10. A vehicle light according to claim 1, characterised in that the light cover lens (3) is constructed as a domelight.

11. A vehicle light according to claim 1, characterised in that the holding device (8) for the light cover lens (3) is constructed as a clamping frame.

12. A vehicle light according to claim 1, characterised in that the base plate (4) consists of an electrically conducting material.

13. A vehicle light according to claim 12, characterised in that the base plate (4) consists of aluminium.

14. A vehicle light according to claim 3, characterised in that the temperature-resistant elastomeric seal (5) consists of an electrically conducting elastomer.

## Revendications

1. Feu de véhicule, comportant un diffuseur, qui est relié à une plaque de base par l'intermédiaire d'un dispositif de maintien et présente dans le diffuseur une ouverture convenant pour l'évacuation de l'eau, caractérisé par le fait qu'il existe une tige (1) électriquement conductrice dont l'une des extrémités pénètre dans l'ouverture (6) et dont l'autre extrémité est en liaison électriquement conductrice avec la masse (10) de véhicule.

2. Feu de véhicule selon la revendication 1, caractérisé par le fait que la tige (1) sort légèrement au-delà du niveau de la surface extérieure du diffuseur (3).

3. Feu de véhicule selon la revendication 1, caractérisé par le fait que l'espace intermédiaire existant entre la tige (1) et le bord de l'ouverture (6) peut être obturé par une garniture d'étanchéité élastomère (5) amovible et résistant à la température.

4. Feu de véhicule selon la revendication 1, caractérisé par le fait que la tige (1) est électriquement reliée à la plaque de base (4) par l'intermédiaire d'un flasque (2).

5. Feu de véhicule selon la revendication 4, caractérisé par le fait que le flasque (2) de la tige (1) est rivé à la plaque de base (4).

6. Feu de véhicule selon la revendication 1, caractérisé par le fait que la tige (1) est constituée d'acier nickelé.

7. Feu de véhicule selon la revendication 1, caractérisé par le fait que la tige (1) présente une section approximativement homogène.

8. Feu de véhicule selon la revendication 7, caractérisé par le fait que la section de la tige (1) vaut au moins 3mm², de préférence 20̸mm².

9. Feu de véhicule selon la revendication 1, caractérisé par le fait que la tige (1) est en liaison électriquement conductrice avec la masse (6) du véhicule par l'intermédiaire d'un ruban de masse (11).

10. Feu de véhicule selon la revendication 1, caractérisé par le fait que le diffuseur (3) est exécuté sous forme d'une cloche.

11. Feu de véhicule selon la revendication 1, caractérisé par le fait que le dispositif de maintien (8) pour le diffuseur (3) est conçu sous forme de cadre de bridage.

12. Feu de véhicule selon la revendication 1, caractérisé par le fait que la plaque de base (4) est constituée d'un matériau électriquement conducteur.

13. feu de véhicule selon la revendication 12, caractérisé par le fait que la plaque de base (4) est constituée d'aluminium.

14. Feu dé véhicule selon la revendication 3, caractérisé par le fait que la garniture d'étanchéité élastomère (5) résistant à la température est constituée d'un élastomère électriquement conducteur.
